# FASCICULE DE BREVET EUROPEEN

(11) **EP 0 466 539 B1**
(45) Date de publication et mention de la délivrance du brevet: **17.08.1994**
(21) Numéro de dépôt: 91401668.8
(22) Date de dépôt: 20.06.1991
(51) Int. Cl.: B60Q 1/076

(54) **Dispositif de commande de l'inclinaison d'un projecteur d'un véhicule automobile**
Steuerungseinrichtung zur Neigung eines Fahrzeugscheinwerfers
Device for controlling the inclination of a vehicle headlamp

(30) Priorité: 21.06.1990 FR 9007797
(43) Date de publication de la demande: 15.01.1992
(73) Titulaire: VALEO VISION, 93012 Bobigny Cédex (FR)
(72) Inventeur: Peret, Hervé, F-78230 Le Pecq (FR); Lambert, Jean, F-91130 Ris-Orangis (FR)
(74) Mandataire: Gamonal, Didier

(56) Documents cités:
- EP-A- 0 138 217
- EP-A- 0 367 668
- FR-A- 2 620 092

## Description

La présente invention concerne un dispositif de commande de la position d'au moins un organe mobile parmi un ensemble de positions discrètes, en particulier pour l'inclinaison d'un projecteur d'un véhicule automobile, du type comprenant une unité de commutation à plusieurs positions discrètes, alimentée par une source de tension, et, de façon associée à le ou les organes mobiles, une unité de positionnement comprenant un moteur à courant continu relié mécaniquement à l'organe mobile et électriquement à l'unité de commutation par un circuit électronique s'étendant dans l'unité de positionnement.

Un tel dispositif est décrit par exemple dans le document FR-A- 2 455 530. Dans celui-ci l'unité de commutation possède un grand nombre de sorties, sauf à prévoir un pont diviseur de tension supplémentaire pour alimenter le moteur. Ceci constitue un handicap surtout lorsque l'on cherche à augmenter le nombre de positions discrètes.

En matière de projecteur, la réglementation exige que, lorsque le fil de commande est débranché, le dispositif doit agir de telle sorte que le projecteur adopte une orientation basse ou identique.

D'une manière générale, en cas d'avarie du fil de commande il y a intérêt à ce que l'organe mobile occupe une position déterminée.

Dans une précédente demande FR-A-2 638 545 du 3 Novembre 1988, le demandeur a exposé une invention qui a pour objet de pallier ces inconvénients, tout en maintenant le dispositif dans une position déterminée en cas d'avarie du fil de commande, et donc de créer un dispositif d'un fonctionnement sûr, doté d'une unité de commutation à faible nombre de sorties sans diminuer le nombre de positions discrètes de l'organe mobile et tout en procurant d'autres avantages.

Dans cette précédente demande, un dispositif du type précité dont le circuit électronique de l'unité de positionnement est alimenté par la source de tension à partir de deux sorties que présente l'unité de commutation à cet effet. Un commutateur est doté d'une sortie à valeurs discrètes de tensions, et un générateur de tension à valeurs discrètes est associé audit commutateur et sont prévus respectivement dans l'unité de commutation et dans l'unité de positionnement. Ces constituants sont dénommés par commodité, d'une part, commutateur et générateur émetteurs pour l'unité de commutation et, d'autre part, commutateur et générateur récepteurs pour l'unité de positionnement. Deux amplificateurs différentiels à gain, montés en sens inverse et possédant chacun une entrée d'analyse reliée à l'autre amplificateur, sont prévus dans l'unité de positionnement pour alimenter le moteur, lesdites sorties d'analyse étant reliées respectivement à la sortie du commutateur émetteur et à la sortie du commutateur récepteur. Un générateur de tension de référence est monté dans la ligne d'alimentation allant de la sortie à valeurs discrètes du commutateur émetteur à l'entrée d'analyse de l'amplificateur concerné, en étant logé dans l'unité de positionnement, pour générer une tension de référence pour une valeur fictive de sortie du commutateur émetteur et entraîner l'organe mobile dans une position déterminée par l'intermédiaire du moteur, ladite valeur fictive étant obtenue pour le même nombre de positions discrètes desdits commutateurs en dotant le générateur récepteur de n+1 valeurs de tensions de sortie et en dotant le générateur émetteur de n valeurs de tensions de sortie.

Or, on s'est aperçu qu'il était souhaitable d'augmenter la capacitance des deux amplificateurs de recopie. A cet effet, l'invention, qui porte remède à cet inconvénient du système précédent, concerne un dispositif du type précité dont le circuit électronique de l'unité de positionnement est alimenté par la source de tension à partir de deux sorties, que présente l'unité de commutation à cet effet.

L'invention se caractérise notamment en ce que la borne commune des entrées d'analyse, reliées aux sorties des deux amplificateurs différentiels montés en sens inverse est connectée à la borne négative de l'alimentation par l'intermédiaire d'un condensateur de charge.

On appréciera, que la position fictive du commutateur émetteur correspond à une réelle position de fonctionnement de l'organe mobile.

Selon une autre caractéristique de l'invention, les deux unités de positionnement étant branchées en parallèle, à chaque unité de commutation est associée une diode d'isolement reliée à la sortie du commutateur émetteur. Ainsi, si l'on souhaite faire fonctionner deux projecteurs avec une seule unité de commutation, la présence d'un ou de deux correcteurs n'influe pas sur la valeur de consigne de l'unité de commutation. Grâce à cette disposition l'impédance de l'unité de commutation n'a pas besoin d'être faible, et celle des unités de positionnement élevée en sorte que les unités de positionnement sont moins sensibles aux phénomènes d'humidité et l'unité de commutation moins sujette à l'échauffement. En cas de débranchement de l'alimentation de l'une des unités de positionnement, l'autre fonctionnera correctement.

Dans le cas où la borne commune précitée est connectée par une capacité à la ligne négative, on s'est aperçu que chaque diode d'isolement pouvait être montée sur la ligne d'alimentation positive des amplificateurs.

La description qui va suivre donne un exemple de réalisation en regard des dessins annexés, selon lesquels :
- La figure 1 représente une vue d'ensemble d'un dispositif de commande de la position de projecteurs d'un véhicule automobile, selon l'invention ;
- la figure 2 représente une vue éclatée d'une unité de positionnement, selon l'invention ;
- la figure 3 représente un schéma électronique de commande du moteur électrique à courant continu dans un premier mode de réalisation ;
- la figure 4 représente un schéma électronique de commande du moteur électrique à courant continu dans un second mode de réalisation, figure dans laquelle les éléments identiques à ceux de la figure 3 portent les mêmes chiffres de référence.

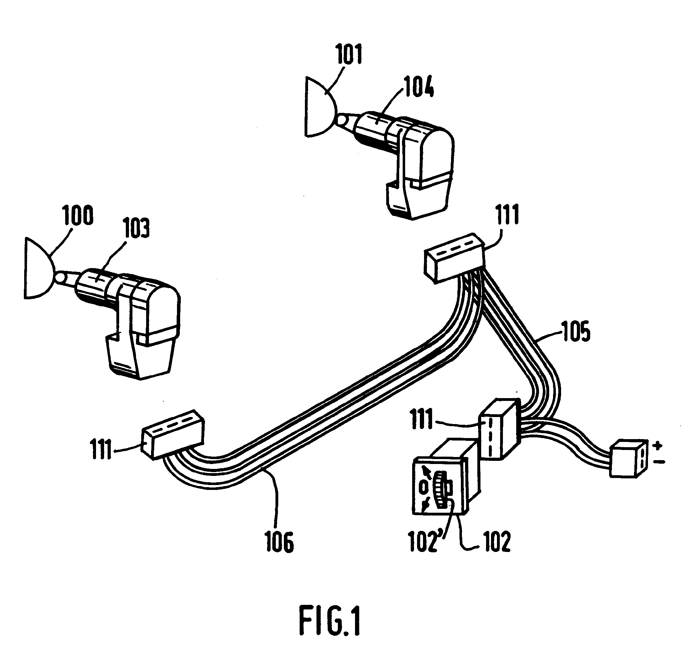

Le dispositif de la figure 1 permet de commander la position d'au moins un organe mobile parmi un ensemble de positions discrètes. Ici, deux organes mobiles sont prévus, chacun étant associé à un projecteur, 100,101 d'un véhicule automobile pour commander la position desdits projecteurs en fonction de la charge du véhicule selon l'une des cinq positions prédéterminées ou discrètes. Les projecteurs 100,101 constituent donc des organes mobiles.

Pour ce faire, une unité de positionnement 103,104 (ou actuateur) à moteur électrique est associée à chacun des projecteurs et l'utilisateur dispose, à l'intérieur de l'habitacle du véhicule, d'une unité de commutation 102 alimentant et commandant chacune des unités de positionnement 103,104.

L'unité de commutation 102, (ou de commande) comporte un organe de manoeuvre, ici un organe rotatif à crans sous forme d'une roue de commande saillante et visible à la figure 1 en 102′, qui est relié fonctionnellement à un commutateur sélectif C à cinq positions stables, décrit ci-après. C'est ce commutateur qui donne la consigne.

L'unité 102 possède trois sorties sur lesquelles sont branchés les trois fils d'un faisceau standard 105 de liaison avec l'unité 104.

Les deux unités 103 et 104 sont reliées entre-elles par un faisceau 106 à trois fils.

L'unité de commutation 102 comporte en outre deux entrées d'alimentation reliées respectivement à l'une des bornes d'une source de tension, ici la batterie du véhicule.

Des connecteurs 111 sont prévus pour branchements et liaisons des faisceaux 105 et 106 avec les diverses unités 102, 103 et 104 ainsi qu'avec la batterie comme visible à la figure 1.

Les deux unités de positionnement 103,104 sont identiques entre-elles.

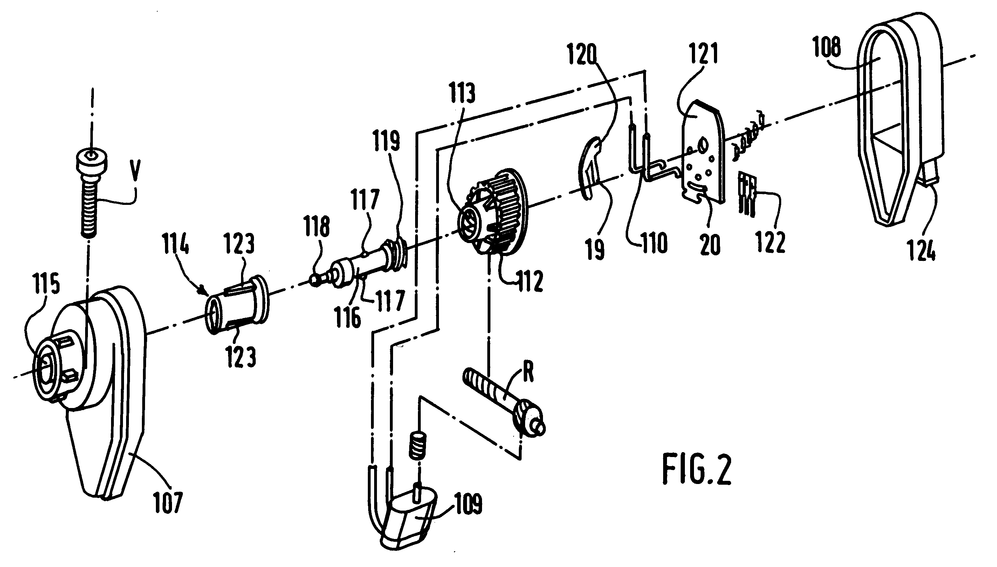

Chaque unité 103,104 figure 2 comporte un moteur électrique 109 à courant continu logé à l'intérieur d'un boîtier, ici en matière plastique, en deux parties 107 et 108 assemblées entre-elles par clipsage.

Le moteur 109 est relié électriquement par des fils 110 à une plaque 121 logée dans la partie 108 et portant une piste, un circuit imprimé, et des composants électroniques selon l'invention, décrits ci-après, nécessaires au fonctionnement de l'ensemble.

Trois broches 122 sont portées par ladite plaque 121 en étant engagées dans une portion saillante 124 de la partie 108.

Ces broches 122 sont reliées à l'unité de commutation 102 par l'intermédiaire du faisceau 105 et des connecteurs 111.

Le moteur est mécaniquement relié au projecteur 101 (ou 100) grâce à une tige mobile 116 agissant sur ledit projecteur par l'intermédiaire de leviers (non visibles). La tige agit en poussée sur les leviers pour commander ledit projecteur. Bien entendu la tige peut agir en traction sur lesdits leviers.

Le mouvement de rotation du moteur est transformé en mouvement de translation de la tige 116 par un mécanisme.

Plus précisément,le moteur 109 entraîne en rotation pas à pas, par l'intermédiaire d'un réducteur R à roue et vis sans fin, une roue 112 comportant un moyeu 113 avec un filet hélicoïdale coopérant avec un filetage 119 de la tige 116, comme décrit dans la demande EP-88401037.2.

La tige porte deux tétons 117 s'engageant chacun respectivement dans une gorge d'une douille 114 montée dans un alésage de la partie 107.

La douille 114 porte des dentures 123 interrompues pour coopération avec une vis de réglage V traversant la face latérale de la partie 107.

La vis V permet le réglage initial du projecteur, tandis que la tige 116 est déplaçable en translation et traverse le nez 115 de la partie 107 pour action par sa rotule sur le projecteur 101.

Suivant une caractéristique de l'invention le circuit électronique de l'unité de positionnement 103 ou 104 est alimenté par la source de tension à partir de deux sorties que présente l'unité de commutation 102 à cet effet.

Plus précisément,en ne considérant que l'unité de positionnement 104, l'unité de commutation 102 présente trois sorties 1, 2, 3 reliées respectivement à la borne positive de la source de tension continue (ici 12 Volts), à la borne négative de ladite source (la masse) et à une sortie 4 à valeurs discrètes de tension du commutateur C. L'unité de positionnement 104 comporte trois entrées 5, 6, 7, (correspondant chacune à l'une des broches 122) reliées auxdites sorties 1,2,3 par le faisceau 105.

Le commutateur C, dit ici par commodité commutateur émetteur, est un commutateur rotatif à cinq plots de contact 8 à 12 disposés sur une piste électrique séparés les uns des autres par des zones non conductrices.

Sur cette piste, glisse un curseur conducteur 13 pour établir une liaison électrique entre l'un des plots 8 à 12 et la sortie 4.

Chacun des plots 8 à 11, est raccordé par l'intermédiaire d'une ligne conductrice aux sorties de valeurs discrètes d'un générateur de tension E, dit ici par commodité générateur émetteur E, en sorte que le cinquième plot 12 n'est relié à aucune sortie de générateur E et constitue un plot fictif suivant une caractéristique de l'invention.

Ledit générateur E est logé, ainsi que le commuteur C, dans l'unité de commutation 102. Le générateur E est ici d'un pont diviseur de tension à résistances R1 à R5 ; les tensions de sorties étant étagées et discrètes.

Ici, les résistances R2 à R4 ont la même valeur, la résistance R1 a globalement une résistance deux fois moindre que celle des résistances R2 à R4 tandis que la résistance R5 a une valeur globalement 4 fois 1/2 plus grande que celle des résistance R2 à R4.

Ainsi, il est possible d'obtenir aux niveaux des points 8 à 11 respectivement une tension de 10,5 V., 9 V., 7,5 V., 6V.

A ce générateur E est associé un générateur de tension G à valeurs discrètes disposé dans l'unité de positionnement 104 et consistant également en un pont diviseur de tension à résistances R6 à R11.

Ce pont diviseur comporte cinq sorties reliées à cinq plots de contact 15 à 18 d'un commutateur rotatif D, dit ici commutateur récepteur, de structure analogue au commutateur C. Ainsi, on voit en 19 le curseur et en 20 la sortie du commutateur D reliée au curseur. Le générateur G de tension à valeurs discrètes sera dénommé ici par commodité générateur récepteur.

Ici, pour que les tensions aux points 18, 17, 16, 15 soient du même ordre de grandeur que les tensions aux points 8 à 11 on donne aux résistances R6 à R9 globalement la même valeur qu'aux résistance R2 à R4 tandis que la valeur de la résistance R10 est le triple de la valeur desdites résistances R2 à R4. Les deux ponts diviseurs G,E sont donc à l'image l'un de l'autre.

Alors que le curseur 13 est relié à l'organe 102', le curseur 19 est lui relié par une liaison mécanique 21 au moteur 109. Comme mieux visible à la figure 2 la roue 112 entraîne en rotation une pièce 120 portant le curseur 19 amené à coopérer avec les plots de contact portés par la plaque 121. Le curseur 19 est donc entraîné par le moteur 109. On notera que la pièce 120 porte un deuxième doigt pour contact avec un secteur annulaire constituant le point 20, comme visible à la figure 2. Ce secteur conducteur est concentrique aux plots 14 à 18 en étant situé sur une plus grande circonférence. Le deuxième doigt est donc plus long.

Le moteur est alimenté à partir d'amplificateurs différentiels 24, 25 à gain limité ou fixe montés en sens inverse et possédant chacun une entrée d'analyse respectivement 26, et 20. Lesdites entrées 26, 20 sont reliées respectivement à la sortie 4 du commutateur émetteur C et à la sortie 20 du commutateur récepteur D. Plus précisément chaque borne d'alimentation 22, 23 du moteur 109 est reliée à la sortie d'un amplificateur opérationnel à gain respectivement 24,25.

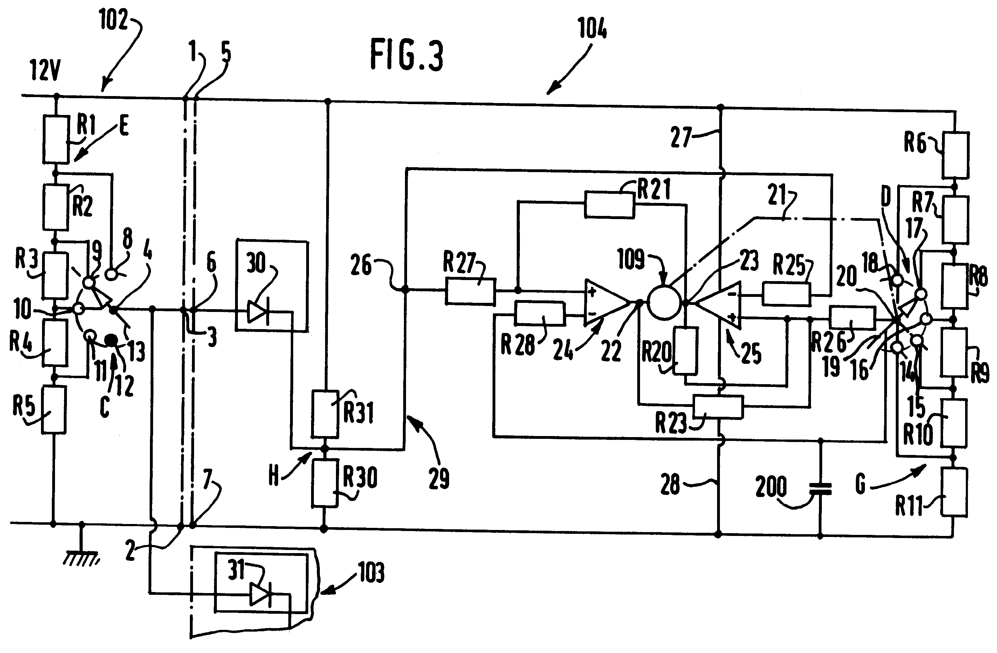

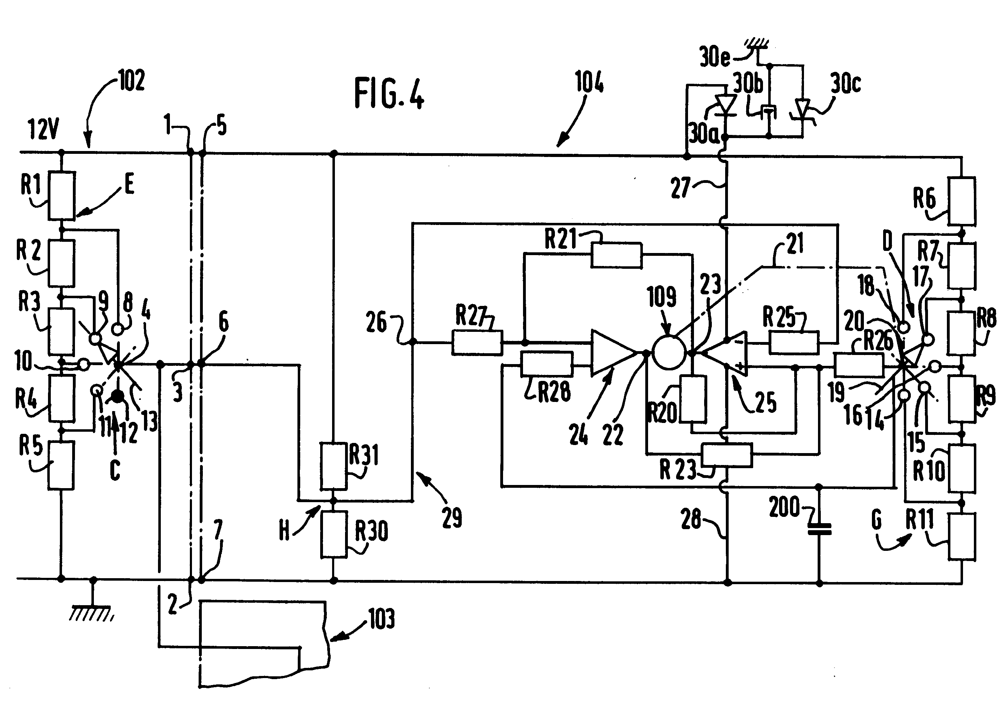

Dans un premier mode de réalisation représenté à la figure 3, le point commun 26 est relié à la sortie 4 par l'intermédiaire d'une diode 30 ou par un simple fil dans un second mode de réalisation représenté à la figure 4.

L'entrée non inverseuse de l'amplificateur 24 est alimentée à partir de la sortie 4 du commutateur C, tandis que l'entrée non inverseuse de l'amplificateur 25 est alimentée à partir de la sortie 20 du commutateur D. A chaque amplificateur 24,25 sont associées des résistances, d'une part, R27, R21, R28 et, d'autre part, R20, R25, R26, R23 comme visible à la figure 3. La résistance R25 branchée sur l'entrée inverseuse de l'amplificateur 25 est reliée à l'entrée d'analyse 26 de l'amplificateur 24, tandis que la résistance R28 branchée sur l'entrée inverseuse de l'amplificateur 24 est reliée à l'entrée d'analyse 20 de l'amplificateur 25. Ces amplificateurs sont logés dans l'unité de positionnement 104 et sont, reliés par des lignes 27 et 28, tout comme le générateur récepteur G aux bornes de la source de tension.

Ainsi, lorsque la position du curseur 13 est différente de celle du curseur 19 par exemple, lorsque l'on déplace le curseur 13 sur le point 10 tandis que le curseur 19 reste sur le point 17, les amplificateurs 24, 25 du fait du déséquilibre, alimentent les moteurs par des tensions complémentaires, celui-ci pouvant tourner ainsi dans les deux sens selon la valeur des tensions en 22 et 23.

Pour que le moteur ne s'arrête pas lorsque le curseur 19 se déplace entre deux plots, deux circuits mémoires sont prévus pour mémoriser le sens de rotation dudit moteur 109. Ici, la résistance R23 relie l'entrée non inverseuse de l'amplificateur 25 à la borne 22 tandis que la résistance R20 relie ladite entrée non inverseuse à la borne 23. Le point commun des deux résistances R23 et R20 est relié par la résistance R26 au plot 20 central du commutateur D dont le curseur 19 est connecté à la ligne négative d'alimentation par une capacité 200. L'entrée positive de l'amplificateur 25 et l'entrée négative de l'amplificateur 24 conservent ainsi la mémoire du sens de rotation.

On notera que les résistances R27,R21, déterminent le gain de l'amplificateur 24, tandis que les résistances R26,R23 R20, déterminent le gain de l'amplificateur 25 comme visible à la figure 3. On notera que le point d'analyse 26 est relié, d'une part, au point 4 à travers la diode 30 dans le mode de réalisation de la figure 3 et par un fil dans le mode de réalisation de la figure 4 et, d'autre part, à l'entrée des résistances R27, R25, tandis que le point d'analyse 20 est relié d'une part à l'entrée R26 et d'autre part à la résistance R28.

Les résistances R28 et R25 constituent des résistances de protection tandis que les résistances R20, R23, R21 permettent de générer une hystérésis assurant une bonne stabilité des positions d'arrêt.

En pratique les résistances R20 à R28 ont des valeurs beaucoup plus grandes que celles des résistances R1 à R11. Par exemple, si la résistance R3 est de l'ordre de 100 ohms celle de la résistance R25 est de l'ordre de 4,7 K ohms. Suivant une caractéristique de l'invention, un générateur de tension de référence H est monté dans la ligne d'alimentation 29 allant de la sortie 4 du commutateur C à l'entrée d'analyse 26 de l'amplificateur 24. Ce générateur est monté dans l'unité 104 et génère une tension de référence pour la valeur fictive de la sortie 4 (curseur 13 sur plot 12) correspondant à une position réelle de sécurité du projecteur.

Ici, ce générateur auxiliaire de tension de référence consiste en un pont diviseur à résistances R31 et R30 montées respectivement entre la borne positive de la source et entre la ligne 29 et entre la ligne 29 et la borne négative de la source de tension.

Le commutateur C est à cinq positions, mais l'une est fictive (plot 12) tandis que le commutateur D est à cinq positions réelles. Cela est dû au fait que le générateur E génère quatre valeurs de sorties discrètes, tandis que le générateur G génère cinq valeurs de sorties discrètes.

Lorsque le curseur 13 est sur le contact 12 (position fictive), la tension au point 26 est déterminée par le pont de référence H et le pont diviseur G possède suivant une caractéristique importante, une résistance R11 supplémentaire pour qu'en position d'arrêt du moteur (potentiel identique aux bornes 22 et 23) la tension au point 14 soit identique à celle au point 26. Ici, la valeur de R11 a été choisie identique à celles des valeurs R9, tandis que la résistance R31 a été choisie globalement deux fois plus grande que R9 et la résistance R30 dix fois plus petite. Ainsi, il est possible d'obtenir une tension de 1,5 V. au point 14.

On notera que la position fictive du commutateur correspond à une position réelle du projecteur celui-ci adoptant alors une position (ou orientation) basse grâce au dispositif interne auxiliaire à générateur H et résistance supplémentaire R11. Lorsque le fil est débranché au point 3 cela n'a aucune importance, le projecteur se dirigeant alors vers sa position basse de sécurité conformément aux exigences de la réglementation. Les unités de positionnement 103, 104 sont montées en parallèle et pour éviter qu'une unité perturbe l'autre lorsque par exemple l'unité 103 est débranchée on prévoit des diodes 30, 31 d'isolement dans les lignes d'alimentation 29 entre le générateur de tension H et le point 4.

Dans un autre mode de réalisation représentée à la figure 4, la diode 30 ou 31 est remplacée par une diode 30a disposée sur la ligne d'alimentation positive 27 de l'amplificateur 25. Cette diode 30a peut être découplée sur la ligne négative 30e d'alimentation générale par un circuit constitué par une diode Zener 30c en parallèle avec un condensateur 30b. Au dessin, la ligne d'alimentation négative a été raccordée à la masse.

Dans tous les cas par action sur le commutateur 102′ on déplace le curseur 13, ce qui détruit l'équilibre des tensions aux bornes 22 et 23 et entraîne la rotation du moteur 109 dans un sens ou dans l'autre suivant les cas jusqu'à ce que le curseur 19 ait atteint une nouvelle position correspondant à un équilibre aux bornes 22 et 23.

Ainsi qu'il ressort à l'évidence de la description, il est possible d'augmenter le nombre de positions du projecteur en augmentant le nombre de sorties des générateurs E et G, ainsi que le nombre des positions des commutateurs C. On appréciera que dans tous les cas le dispositif ne fait appel qu'à des faisceaux standard à trois fils pour relier l'unité de commutation soit directement, soit indirectement aux unités de positionnement 103 et 104.

Lorsque la tige 116 agit en tirant sur le projecteur concerné il suffit d'augmenter la tension de référence du générateur de tension de référence H pour obtenir non pas le potentiel le plus bas par rapport aux niveaux de sorties des générateurs E et G mais, le potentiel le plus haut par rapport auxdites sorties.

D'une manière générale dans le cas où la position de sécurité doit être contraire à celle décrite ci-dessus, c'est le plot 8 qui est fictif, la tension au point de jonction des résistances R31, R30 avec la ligne 29 correspondant à la tension au point 18 du générateur G. La diode 30 est montée en sens inverse dans ce cas.

Bien entendu, la présente invention n'est pas limitée aux exemples de réalisation décrits. En particulier l'organe de commande 102′ peut être à déplacement linéaire. Le générateur émetteur peut être du type digital, ledit générateur pouvant ne comporter qu'une seule sortie qui prend des valeurs discrètes conformément à une table logique. Enfin, le dispositif peut permettre de commander la position d'un volet d'une installation de chauffage et de climatisation par exemple pour véhicules automobiles. De même l'invention s'applique aux motocyclettes n'ayant qu'un seul projecteur.

## Revendications

1. Dispositif de commande de la position d'au moins un organe mobile (100, 101) parmi un ensemble de positions discrètes, en particulier pour l'inclinaison d'un projecteur d'un véhicule automobile, du type comprenant une unité de commutation (102) à plusieurs positions discrètes, alimentée par une source de tension, et, de façon associée à le ou lesdits organes mobiles, une unité de positionnement (103, 104) comprenant :
- un moteur à courant continu (109) relié mécaniquement à l'organe mobile et électriquement à l'unité de commutation par un circuit électronique s'étendant dans l'unité de positionnement,
- ledit circuit électronique de l'unité de positionnement (103, 104) étant alimenté par la source de tension à partir de deux sorties (1, 2) que présente ladite unité de commutation (102) à cet effet,
- un commutateur, doté d'une sortie à valeurs discrètes de tensions, et un générateur de tension à valeurs discrètes associé audit commutateur étant prévus respectivement dans l'unité de commutation (102) et dans l'unité de positionnement (103),lesdits constituants étant dénommés par commodité, d'une part, commutateurs (C) et générateurs (E) émetteurs pour l'unité de commutation et, d'autre part, commutateur (D) et générateur (G) récepteur pour l'unité de positionnement,
- deux amplificateurs différentiels (24,25) à gain montés en sens inverse et possédant chacun une entrée d'analyse (26,20) reliée à l'autre amplificateur, étant prévus dans l'unité de positionnement (103,104) pour alimenter le moteur (109), lesdites sorties d'analyse (26,20) étant reliées respectivement à la sortie (4) du commutateur émetteur et à la sortie (20) du commutateur récepteur,
- un générateur de tension de référence (H) est monté dans la ligne d'alimentation (29) allant de la sortie (4) à valeurs discrètes du commutateur émetteur (E) à l'entrée d'analyse (26) de l'amplificateur (24) concerné, en étant logé dans l'unité de positionnement (103, 104), pour générer une tension de référence pour une valeur fictive (12) de sortie du commutateur émetteur et entraîner l'organe mobile dans une position déterminée par l'intermédiaire du moteur (109), ladite valeur fictive étant obtenue pour le même nombre de positions discrètes desdits commutateurs (C,D) en dotant le générateur récepteur (G) de (n+1) valeurs de tension de sortie et en dotant le générateur émetteur (E) de n valeurs de tension de sortie, caractérisé en ce que la borne commune (20) des entrées d'analyse reliées aux sorties des deux amplificateurs différentiels montés en sens inverse, est connectée à la borne négative de l'alimentation par l'intermédiaire d'un condensateur (200) de mémorisation du sens de rotation du moteur (109).

2. Dispositif selon la revendication 1 dans lequel au moins deux unités de positionnement (103,104) montées en parallèle sont prévues, caractérisé en ce que des diodes d'isolement (30,31) sont montées chacune dans les lignes d'alimentation (29) entre le générateur de tension de référence (H) et la sortie (4) du commutateur émetteur (C).

3. Dispositif selon la revendication 1, dans lequel au moins deux unités de positionnement (103,104) montées en parallèle sont prévues, caractérisé en ce que des diodes d'isolement (30a) sont montées chacune dans les lignes d'alimentation (27) positive des amplificateurs.

4. Dispositif selon la revendication 3, caractérisé en ce que chaque diode (30a) est découplée par un circuit parallèle diode Zener (30c) - condensateur (30b).

5. Dispositif selon l'une quelconque des revendications 1 à 4, caractérisé en ce que les amplificateurs différentiels à gain (24,25) consistent en des amplificateurs opérationnels (24,25) à gain dont l'entrée inverseuse de chacun est reliée à l'entrée d'analyse (26,20) de l'autre amplificateur.

## Patentansprüche

1. Steuerungseinrichtung zur Lageregelung wenigstens eines beweglichen Organs (100, 101) in verschiedene diskrete Stellungen, insbesondere zur Neigung eines Fahrzeugscheinwerfers, bestehend aus einer Schalteinheit (102) mit mehreren diskreten Positionen, die durch eine Spannungsquelle gespeist wird, und einer mit dem oder den genannten beweglichen Organen verbundenen Positioniereinheit (103, 104), welche die folgenden Bestandteile umfaßt:
- einen Gleichstrommotor (109), der mechanisch mit dem beweglichen Organ und elektrisch mit der Schalteinheit über einen elektronischen Schaltkreis verbunden ist, der sich in die Positioniereinheit erstreckt,
- wobei der genannte elektronische Schaltkreis der Positioniereinheit (103, 104) durch die Spannungsquelle von zwei Ausgängen (1, 2) aus gespeist wird, die dazu an der Schalteinheit (102) vorgesehen sind,
- einen Schalter, der einen Ausgang mit diskreten Spannungswerten aufweist, und einen Spannungsgenerator mit diskreten Werten, der mit dem genannten Schalter verbunden ist, wobei diese beiden Bestandteile in der Schalteinheit (102) bzw. in der Positioniereinheit (103) angeordnet sind und der Einfachheit halber einerseits als Sendeschalter (C) und Sendegenerator (E) für die Schalteinheit und andererseits als Empfangsschalter (D) und Empfangsgenerator (G) für die Positioniereinheit bezeichnet werden,
- zwei Differentialverstärker (24, 25), die in entgegengesetzter Richtung geschaltet sind und jeweils einen Analyseeingang (26, 20) besitzen, der mit dem anderen Verstärker verbunden ist, wobei diese Verstärker in der Positioniereinheit (103, 104) zur Versorgung des Motors vorgesehen sind und wobei die Analyseausgänge (26, 20) jeweils mit dem Ausgang (4) des Sendeschalters bzw. mit dem Ausgang (20) des Empfangsschalters verbunden sind,
- einen Bezugsspannungsgenerator (H), der in der Speiseleitung (29) eingebaut ist, die von dem Ausgang (4) mit diskreten Werten des Sendeschalters (E) zu dem Analyseeingang (26) des betreffenden Verstärkers (24) verläuft, wobei er in der Positioniereinheit (103, 104) angeordnet ist, um eine Bezugsspannung für einen fiktiven Ausgangswert (12) des Sendeschalters zu erzeugen und das bewegliche Organ durch den Motor (109) in eine bestimmte Stellung bringen zu lassen, wobei der genannte fiktive Wert für die gleiche Anzahl von diskreten Stellungen der besagten Schalter (C, D) erzielt wird, indem der Empfangsgenerator (G) mit (n+1) Ausgangsspannungswerten und der Sendegenerator (E) mit n Ausgangsspannungswerten vorgesehen ist, **dadurch gekennzeichnet**, daß die gemeinsame Klemme (20) der Analyseeingänge, die mit den Ausgängen der beiden in entgegengesetzter Richtung geschalteten Differentialverstärker verbunden sind, über einen Kondensator (200) zur Speicherung der Drehrichtung des Motors (109) an die Minusklemme der Speiseleitung angeschlossen ist.

2. Einrichtung nach Anspruch 1, bei der mindestens zwei parallelgeschaltete Positioniereinheiten (103, 104) vorgesehen sind , **dadurch gekennzeichnet**, daß Trenndioden (30, 31) jeweils in den Speiseleitungen (29) zwischen dem Bezugsspannungsgenerator (H) und dem Ausgang (4) des Sendeschalters (C) eingebaut sind.

3. Einrichtung nach Anspruch 1, bei der mindestens zwei parallelgeschaltete Positioniereinheiten (103, 104) vorgesehen sind , **dadurch gekennzeichnet**, daß Trenndioden (30a) jeweils in den Speiseplusleitungen (27) der Verstärker eingebaut sind.

4. Einrichtung nach Anspruch 3, **dadurch gekennzeichnet**, daß jede Diode (30a) durch eine Parallelschaltung Zener-Diode (30c) - Kondensator (30b) abgeschaltet wird.

5. Einrichtung nach einem der Ansprüche 1 bis 4, **dadurch gekennzeichnet**, daß die Differentialverstärker (24, 25) aus Operationsverstärkern (24, 25) bestehen, deren nichtinvertierender Eingang jeweils mit dem Analyseeingang (26, 20) des anderen Verstärkers verbunden ist.

## Claims

1. A device for controlling the position of at least one mobile element (100, 101) among a set of discrete positions, in particular for the inclination of a headlamp of a motor vehicle, of the type comprising a switching unit (102) having several discrete positions, supplied by a voltage source, and, in association with the mobile element(s), a positioning unit (103, 104) comprising :
- a direct current motor (109) connected mechanically to the mobile element and electrically to the switching unit by an electronic circuit extending in the positioning unit,
- the said electronic circuit of the positioning unit (103, 104) being supplied by the voltage source from two outputs (1, 2) which the said switching unit (102) has for this purpose,
- a switch, equipped with an output having discrete voltage values, and a discrete value voltage generator associated with said switch being provided respectively in the switching unit (102) and in the positioning unit (103), the said components being called, for convenience, firstly transmitting switches (C) and generators (G) for the switching unit, and secondly receiving switch (D) and generator (G) for the positioning unit,
- two differential gain amplifiers (24, 25) mounted in opposite directions and each having an analysis input (26, 20) connected to the other amplifier, being provided in the positioning unit (103, 104) in order to supply the motor (109), the said analysis outputs (26, 20) being connected respectively to the output (4) of the transmitting switch and to the output (20) of the receiving switch,
- a reference voltage generator (H) is mounted in the supply line (29) going from the discrete value output (4) of the transmitting switch (E) to the analysis input (26) of the amplifier (24) concerned, whilst being housed in the positioning unit (103, 104), in order to generate a reference voltage for an artificial output value (12) of the transmitting switch and to drive the mobile element into a determined position by means of the motor (109), the said artificial value being obtained for the same number of discrete positions of the said switches (C, D), by providing the receiving generator (G) with (n+1) output voltage values and by providing the transmitting generator (E) with n output voltage values,
**characterised in that** the common terminal (20) of the analysis inputs connected to the outputs of the two differential amplifiers mounted in opposite directions is connected to the negative terminal of the supply by means of a capacitor (200) for memorising the rotational direction of the motor (109).

2. A device according to Claim 1 in which at least two positioning units (103, 104) mounted in parallel are provided,
characterised in that insulating diodes (30, 31) are each mounted on the supply lines (29) between the reference voltage generator (H) and the output (4) of the transmitting switch (C).

3. A device according to Claim 1, in which at least two positioning units (103, 104) mounted in parallel are provided,
characterised in that the insulating diodes (30a) are each mounted in the positive supply lines (27) of the amplifiers.

4. A device according to Claim 3,
characterised in that each diode (30a) is by-passed by a parallel circuit comprising a Zener diode (30c) and capacitor (30b).

5. A device according to any one of Claims 1 to 4,
characterised in that the differential gain amplifiers (24, 25) consist of operational gain amplifiers (24, 25), the inverting inputs of which are each connected to the analysis input (26, 20) of the other amplifier.
